Europäisches Patentamt

European Patent Office

Office européen des brevets

(11) Veröffentlichungsnummer : **0 107 083**
**B1**

(12) **EUROPÄISCHE PATENTSCHRIFT**

(45) Veröffentlichungstag der Patentschrift :
27.07.88

(51) Int. Cl.⁴ : **G 06 K   9/03**

(21) Anmeldenummer : **83109628.4**

(22) Anmeldetag : **27.09.83**

(54) **Belegverarbeitungseinrichtung mit Korrekturschaltung und Datensichtgerät.**

(30) Priorität : **29.09.82 DE 3236100**

(43) Veröffentlichungstag der Anmeldung :
**02.05.84 Patentblatt 84/18**

(45) Bekanntmachung des Hinweises auf die Patenterteilung : **27.07.88 Patentblatt 88/30**

(84) Benannte Vertragsstaaten :
**AT BE CH FR GB IT LI NL SE**

(56) Entgegenhaltungen :
**FR-A- 2 146 875**
**US-A- 3 903 517**
**PATENTS ABSTRACTS OF JAPAN, Band 5, Nr. 185 (P-91)[857], 25. November 1981; & JP - A - 56 114 076 (FUJITSU K.K.) 08-09-1981**

(73) Patentinhaber : **COMPUTER GESELLSCHAFT KONS-TANZ MBH**
**Max-Stromeyer-Strasse 116**
**D-7750 Konstanz (DE)**

(72) Erfinder : **Langfeldt, Folkhart, Ing. grad.**
**Martin-Schleyer-Strasse 13 a**
**D-7750 Konstanz 16 (DE)**
Erfinder : **Mittelbach, Helmut, Dipl.-Ing.**
**Austrasse 30**
**D-7750 Konstanz (DE)**
Erfinder : **Kochert, Wilfried, Ing. grad.**
**Gaussweg 14**
**D-7750 Konstanz (DE)**

(74) Vertreter : **Mehl, Ernst, Dipl.-Ing. et al**
**Postfach 22 01 76**
**D-8000 München 22 (DE)**

EP 0 107 083 B1

## Beschreibung

Die Erfindung betrifft eine Einrichtung zur Belegverarbeitung nach dem Oberbegriff des Patentanspruchs 1.

Für die automatische Texterfassung, Belegverarbeitung oder dergleichen, sind Zeichenleseeinrichtungen zur optischen Abtastung von Zeichenvorlagen bekannt, deren gelesene Information in codierter Form an eine Datenverarbeitungsanlage weitergeleitet bzw. auf einem Datensichtgerät dargestellt wird. Von der Erkennungselektronik nicht erkennbare Zeichen werden dabei durch Rückweisungszeichen, z. B. in Form eines Rechtecks, besonders markiert. Mittels einer Eingabetastatur besteht dann die Möglichkeit, das entsprechende Zeichen an der durch einen sogenannten Cursor signalisierten Zeichenstelle einzutasten.

Es sind aber auch Fälle denkbar, bei denen das nicht erkannte Zeichen auch bei vorhandener Redundanz aus dem Zusammenhang (Kontext) nicht eindeutig ermittelt werden kann. Für diese Fälle sind bereits Datensichtgeräte bekannt, bei denen in einem abgetrennten Bereich des Bildschirms eine pseudographische Darstellung des Bitmusters für das nicht erkannte Zeichen möglich ist. Im Hinblick auf eine hohe Auflösung werden derartige Bitmuster meist in einem sehr großen Maßstab dargestellt, so daß sich das Auge des Betrachters bei einer gleichzeitigen Betrachtung der Alphanumerikzeichen im oberen Bereich des Bildschirms einerseits und des graphischen Bitmusters im unteren Bereich des Bildschirms wegen der unterschiedlichen Größenverhältnisse ständig umstellen muß, so daß das Auge relativ schnell ermüdet.

Aus US-A-3 903 517 ist eine Belegverarbeitungseinrichtung bekannt bei der die von Zeichenvorlagen gelesene Information in codierter Form in einem ersten Bildschirmbereich angezeigt wird. Die Bitmuster nicht erkannter Zeichen werden in einem zweiten Bildschirmbereich wiedergegeben.

Der vorliegenden Erfindung liegt die Aufgabe zugrunde, für eine Belegverarbeitungseinrichtung mit optischer Zeichenerkennung einen Weg aufzuzeigen, mit dem die Korrektur fehlerhafter bzw. unvollständig gelesener Belegdaten möglichst schnell sowie unter Berücksichtigung ergonomischer Gesichtspunkte möglichst einfach und ermüdungsfrei durchführbar ist.

Diese Aufgabe wird bei einer gattungsgemäßen Einrichtung durch die kennzeichnenden Merkmale des Patentanspruchs 1 gelöst.

Vorteilhafte Weiterbildungen der Erfindung ergeben sich aus den Merkmalen der Unteransprüche.

Die mit der Erfindung erzielten Vorteile bestehen vor allem darin, daß in einem separaten Korrekturfeld des Bildschirms sowohl die die nicht erkannten Zeichen enthaltenden Zeichengruppen als auch die Bitmuster der nicht erkannten Zeichen, und zwar unmittelbar über oder unter dem entsprechenden Rückweisungszeichen dargestellt werden, so daß eine schnelle Zuordnung der nicht erkannten Zeichen zu der jeweils in Frage kommenden Zeichenklasse und demzufolge eine schnelle Korrektur möglich ist. Außerdem bestehen aufgrund der kleineren Abmessungen der Bitmuster keine Adaptionsschwierigkeiten bei der Bedienung.

Ein Ausführungsbeispiel der Erfindung ist in der Zeichnung dargestellt und wird im folgenden näher beschrieben. Dabei zeigen :

Figur 1  das Prinzipschaltbild einer Korrekturschaltung in einer Belegverarbeitungseinrichtung gemäß der Erfindung

Figur 2  ein Beispiel für einen in Handblockschrift ausgefüllten Beleg

Figur 3  ein Beispiel für die Einspeicherung der Bitmuster in die einzelnen Speicher der Korrekturschaltung gemäß Fig. 1

Figur 4  die Darstellung der Beleginformation gemäß Fig. 2 auf dem Bildschirm eines Datensichtgerätes.

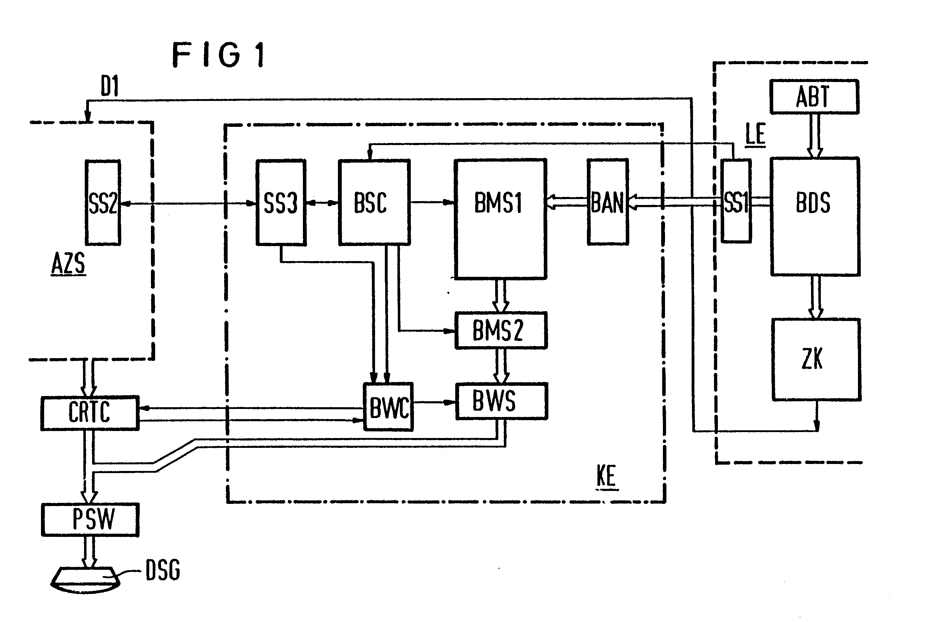

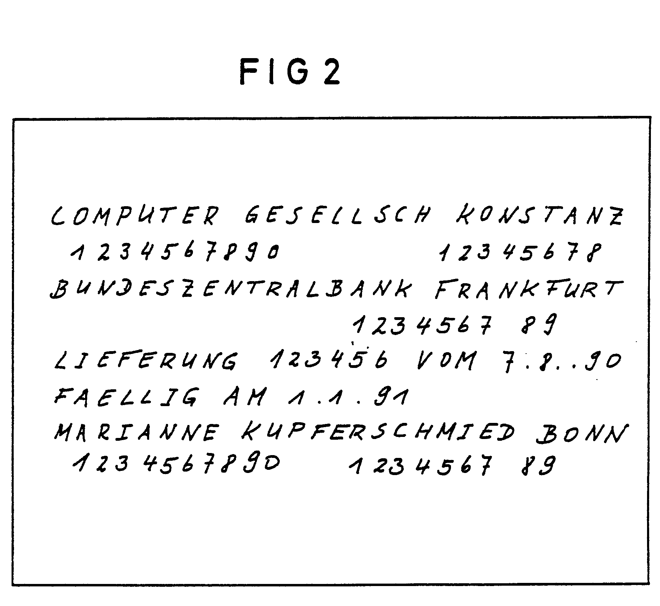

Die in Fig. 1 dargestellte Prinzipschaltung ist Bestandteil einer Einrichtung zur Belegverarbeitung, bei der die an einer Eingabestation bereitgestellten Belege einer Lesestation LE zugeführt, dort optisch gelesen und anschließend in eine Ausgabestation transportiert werden. Gleichzeitig werden die in einer Abtasteinheit ABT gelesenen Daten in einem Zeichenklassifikator ZK weiterverarbeitet und in codierter Form an eine Anzeigesteuerung AZS für das Datensichtgerät DGS übertragen. Außerdem werden die in einem Bilddatenspeicher BDS zwischengespeicherten Lesedaten, z. B. der Originalinhalt eines in Handblockschrift ausgefüllten Beleges gemäß Fig. 2, als Schwarz-Weißinformation über eine Schnittstelle SS1 und ein Bitmusterdaten-Anpaßwerk BAN seriell in einen ersten Bitmusterspeicher BMS1 der Korrektureinheit KE übertragen, der sämtliche Zeichen des Beleges als Bitmuster zwischenspeichert. Der Ausgang dieses ersten Bitmusterspeichers BMS1 ist mit einem zweiten, kleineren Bitmusterspeicher BMS2 verbunden. Aufgrund des an die Anzeigesteuerung AZS übertragenen ersten Datendatzes D1, der die klassifizierten Zeichen, darunter auch Rückweisungszeichen, in codierter Darstellung enthält, wird nun der erste Bitmusterspeicher BMS1 so angesteuert, daß er nur jeweils die Bitmuster der nicht erkannten Zeichen in den zweiten Bitmusterspeicher BMS2 überträgt.

Zu diesem Zweck errechnet ein in der Anzeigesteuerung AZS vorgesehener Mikrocomputer aufgrund der Position der Rückweisungszeichen im Datensatz D1 für jede Rückweisung die Anfangsadresse des Speicherbereichs im ersten Bitmusterspeicher BMS1, der das Bitmuster des jeweils nicht erkannten Zeichens enthält. Diese Anfangsadressen werden über die Schnittstellen SS2, SS3 der Speichersteuerung BSC zur Verfügung gestellt, die das Umspeichern der durch die jeweiligen Anfangsadressen gekennzeichneten Speicherbereiche aus dem ersten Bitmusterspeicher BMS1 in den zweiten Bitmusterspeicher BMS2 durchführt. Die Speicherkapazität des ersten Bitmusterspeichers BMS1 ist so bemessen, daß die Bitmuster aller Zeichen eines Beleges abgespeichert werden können, während diejenige des zweiten Bitmusterspeichers BMS2 so ausgelegt ist, daß dort die Bitmuster der Rückweisungszeichen für mehrere Belege gespeichert werden können. Dadurch ergibt sich eine Pufferwirkung zwischen dem Lese- und dem Korrekturvorgang. Eine Erhöhung der Durchsatzleistung der Belegverarbeitungseinrichtung ist die Folge.

Als nächstes wird in der Anzeigesteuerung AZS ein zweiter Datensatz D2 aufgebaut, der nur Zeichenfolgen enthält, in denen wenigstens ein Rückweisungszeichen vorkommt. Dieser zweite Datensatz D2 darf maximal so viele Zeichenstellen umfassen, wie in einer Bildschirmzeile darstellbar sind. Bei sehr vielen Rückweisungszeichen in einem Beleg müssen gegebenenfalls für die Korrektur dieses Belegs mehrere Korrekturphasen durchlaufen werden, wobei für jede Phase ein neuer zweiter Datensatz aufgebaut werden muß.

Aufgrund der jeweiligen Position der Rückweisungszeichen innerhalb des zweiten Datensatzes D2 werden nun neue Anfangsadressen errechnet, mit denen die Bitmuster aus dem zweiten Bitmusterspeicher BMS2 in einen nachgeschalteten Bildwiederholspeicher BWS übertragen werden. Der Bildwiederholspeicher BWS ist so organisiert, daß sein binärer Inhalt als Graphik in einem horizontalen Streifen auf dem Bildschirm des Datensichtgerätes DSG dargestellt werden kann. Die vertikale Ausdehnung des Streifens ist so bemessen, daß die Höhe der Bitmuster abgebildet werden kann. Dieser so gebildete Streifen wird ober- oder gegebenenfalls unterhalb der Datenzeile des zweiten Datensatzes D2 auf dem Bildschirm dargestellt.

Im Gegensatz zu den Bitmusterspeichern BMS1 und BMS2 wird der Bildwiederholspeicher BWS nicht gepackt beschrieben sondern derart, daß bei der Wiedergabe des Speicherinhalts die Bitmuster unmittelbar unter- bzw. oberhalb der zugehörigen Rückweisungszeichen des zweiten Datensatzes auf dem Bildschirm zu stehen kommen. Zu diesem Zweck wird jeder Zeichenzeile im Datensatz D2 eine Anfangsadresse im Bildwiederholspeicher BWS zugeordnet.

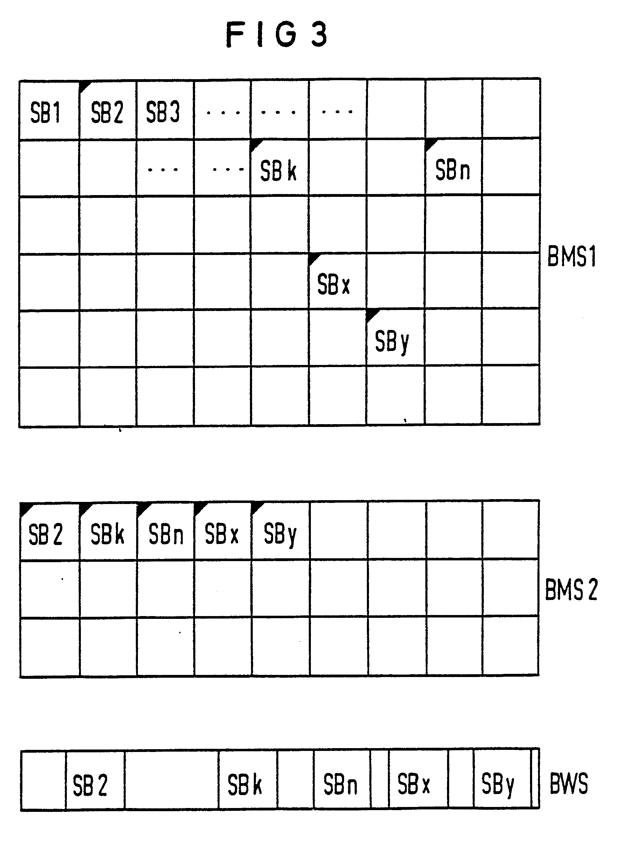

Einzelheiten dieses Datentransfers zwischen dem ersten und zweiten Bitmusterspeicher BMS1, 2 und zwischen dem zweiten Bitmusterspeicher BMS2 und dem Bildwiederholspeicher BWS sind aus Fig. 3 ersichtlich. Die jeweils mit einem dunklen Dreieck in der linken oberen Ecke markierten Speicherblöcke SB2, SBk, SBn, SBx, SBy enthalten die Bitmuster nicht erkennbarer Zeichen. Sie werden zunächst in gepacker Form in den zweiten Bitmusterspeicher BMS2 übertragen und schließlich entsprechend der Position der Rückweisungszeichen im zweiten Datensatz D2 in den Bildwiederholspeicher BWS eingeschrieben.

Die im Bildwiederholspeicher BWS enthaltenen Graphikmuster werden schließlich durch die Speichersteuerung BWC in den Bildschirm des Datensichtgerätes DSG an definierter Stelle eingeblendet. Dies geschieht in der Weise, daß die Übertragung der codierten Zeichen aus der Anzeigesteuerung AZS über die Steuereinheit CRTC und den Parallel/Serien-Wandler PSW des Datensichtgerätes DSG an definierter Stelle abgebrochen und stattdessen der Inhalt des Bildwiederholspeichers BWS ausgelesen wird. Auf dem Bildschirm des Datensichtgerätes werden dann gemeinsam die Zeichen des ersten Datensatzes D1, zum Beispiel die Gesamtinformation des in Fig. 2 dargestellten Beleges, der zweite Datensatz D2 mit den jeweils ein oder mehrere Rückweisungszeichen enthaltenden Zeichenfolgen und der dem zweiten Datensatz räumlich zugeordnete Inhalt des Bildwiederholspeichers dargestellt.

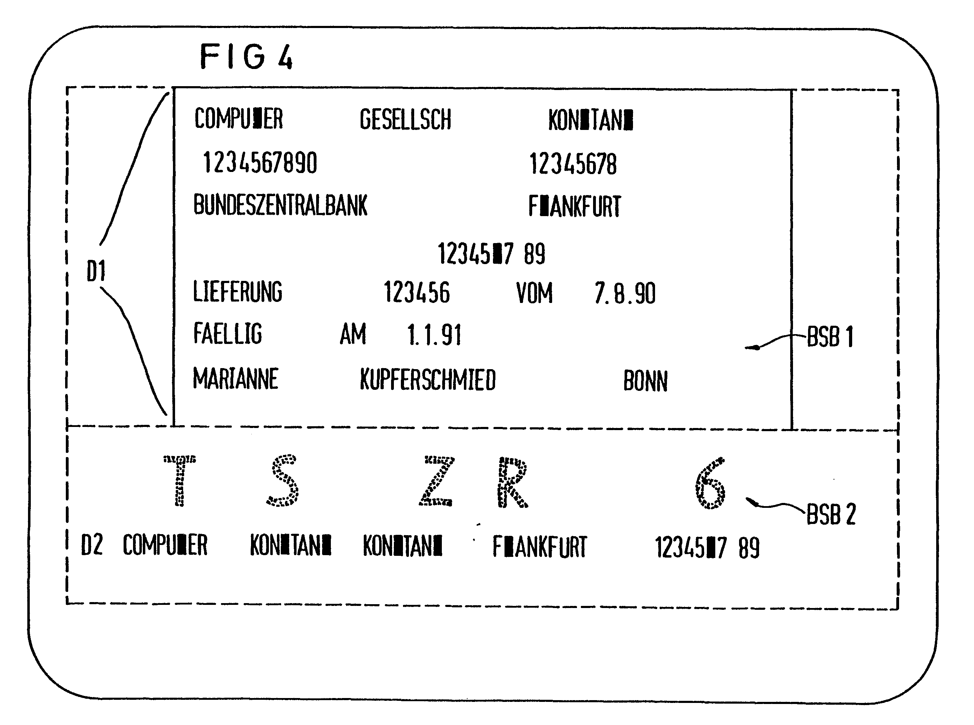

Einzelheiten der Darstellung auf dem Bildschirm sind aus Fig. 4 ersichtlich. In einem ersten Bildschirmbereich BSB1 ist die Information des Beleges gemäß Fig. 2 als Ergebnis des Zeichengenerators ZK in der durch den Zeichencode vorgegebenen Schrift dargestellt. Nicht erkannte Zeichen sind durch Rückweisungszeichen, zum Beispiel durch ein Rechteck besonders gekennzeichnet. Im zweiten Bildschirmbereich BSB2 werden diejenigen Zeichenfolgen, d. h. insbesondere ganze Wörter bzw. zusammenhängende Ziffernfolgen, die nicht erkennbare Zeichen enthalten, ein zweites Mal dargestellt.

Außerdem wird direkt über oder gegebenenfalls unter dem jeweils nicht erkannten Zeichen das zugehörige Bitmuster aus dem Bildwiederholspeicher BSW (siehe Fig. 1) eingeblendet. Aus dem Zusammenhang (Kontext) der Zeichenfolge und dem Graphikmuster des nicht erkannten Zeichens kann dann sehr schnell das in Frage kommende Zeichen ermittelt und über eine Tastatur nachträglich eingeschrieben werden.

Wenn sich in einer Zeichenfolge mehrere nicht erkennbare und eng genachbarte Zeichen finden, wird diese Zeichenfolge, wie das Beispiel Konstanz zeigt, entsprechend mehrfach dargestellt und jeder dieser Zeichenfolgen je ein Graphikmuster für ein nicht erkanntes Zeichen zugeordnet. Es ist zweckmäßig, wenn mehrere, vorzugsweise alle Zeichenfolgen eines Beleges mit nicht erkennbaren Zeichen gemeinsam auf dem Bildschirm dargestellt werden, weil dann störende Bildwechsel während der Korrektur eines einzigen Beleges weitgehend vermieden werden können.

Die augenblicklich zu beeinflussende Rückweisungsstelle wird auf dem Bildschirm mit einem sogenannten Cursor markiert. Dieser Cursor wird z. B. durch einen rechteckigen hellen Rahmen dargestellt, dessen Innenraum durch Hell-/Dunkeltastung periodisch blinkt. Sobald das ermittelte Zeichen eingetastet ist, springt der Cursor auf die nächste Rückweisungsstelle. Nach der Korrektur der letzten Rückweisungsstelle verschwindet der Cursor aus dem Belegrahmen und der korrigierte Datensatz wird an die Datenverarbeitungsanlage übertragen.

Bei dem durch ein Rückweisungszeichen markierten Zeichen hat zwar die Erkennungselektronik in der Regel das Zeichen erkannt, aber doch nicht zweifelsfrei genug, so daß die Erkennungssicherheitsprüfung negativ ausfällt.

In der Gerätesteuerung des Datensichtgerätes ist nun ein Vergleicher vorgesehen, der den dem nicht eindeutig erkennbaren Zeichen entsprechenden binären Zeichencode mit dem Zeichencode des eingetasteten Zeichens vergleicht und bei einer Ungleichheit ein akustisches und/oder optisches Warnsignal auslöst.

**Patentansprüche**

1. Belegverarbeitungseinrichtung, bestehend aus einer Eingabestation, einer Lesestation (LE), einer Belegsichtstation mit einem darüber angeordneten Datensichtgerät (DSG) und einer darunter vorgesehenen Tastatur, einer Ablagestation mit einer oder mehreren Ablageflächen, ferner aus einer Steuereinheit (CRTC) für das Datensichtgerät (DSG) zur kombinierten Anzeige von in einem Zeichenklassifikator (ZK) der Lesestation (LE) in einen binären Zeichencode umgesetzten alphanumerischen Zeichen in einem ersten Bereich (BSB1) des Bildschirms und von alphanumerischen und/oder graphischen Zeichen aus einem Bilddatenspeicher in einem zweiten Bereich (BSB2) des Bildschirmes sowie einer Korrekturschaltung (KE) zur Markierung von in der Lesestation (LE)nicht erkannten und durch Rückweisungszeichen dargestellten Zeichen und zur nachträglichen Eintastung der entsprechenden Zeichen in den auf dem Datensichtgerät (DSG) dargestellten Datensatz, dadurch gekennzeichnet, daß die Korrekturschaltung (KE) einen ersten Bitmusterspeicher (BMS1) für die Bitmuster aller auf dem ersten Bildschirmbereich (BSB1) gleichzeitig darstellbaren Zeichen eines ersten Datensatzes (D1) enthält, daß dieser erste Bitmusterspeicher (BMS1) mit den aus der Position der im ersten Datensatz (D1) enthaltenen Rückweisungszeichen abgeleiteten Anfangsadressen in der Weise ansteuerbar ist, daß die Inhalte der den Rückweisungszeichen zugeordneten Speicherblöcke ausgelesen und in gepackter Form in Speicherblöcke eines zweiten, kleineren Bitmusterspeichers (BMS2) übertragen werden, daß eine Anzeigesteuerung (AZS) aus wenigstens ein nicht erkennbares Zeichen enthaltenden Zeichengruppen des ersten Datensatzes (D1) einen in einer Bildschirmzeile innerhalb des zweiten Bildschirmbereichs (BSB2) darstellbaren zweiten Datensatz (D2) bildet, daß der zweite Bitmusterspeicher (BMS2) mit einem Bildwiederholspeicher (BWS) verbunden ist, in den die Bitmuster der Rückweisungszeichen aus dem zweiten Bitmusterspeicher (BMS2) aufgrund von Adressen, die sich durch die jweilige Position der Rückweisungszeichen innerhalb des zweiten Datensatzes (D2) ergeben, an jeweils entsprechender Stelle einspeicherbar sind und daß die Steuereinheit (CRTC) des Datensichtgerätes (DSG) in der Weise steuerbar ist, daß der Inhalt des Bildwiederholspeichers (BWS) ober- oder unterhalb der den zweiten Datensatz enthaltenden Zeichenzeile in den zweiten Bildschirmbereich (BSB2) einblendbar ist.

2. Einrichtung nach Anspruch 1, dadurch gekennzeichnet, daß die Steuereinheit (CRTC) des Datensichtgerätes (DSG) in der Weise steuerbar ist, daß im Falle mehrerer nicht erkennbarer und eng benachbarter Zeichen innerhalb einer Zeichengruppe diese Zeichengruppe mehrfach darstellbar ist und die graphischen Bitmuster der nicht erkennbaren Zeichen auf die einzelnen Zeichengruppen verteilt sind.

3. Einrichtung nach Anspruch 1 oder 2, dadurch gekennzeichnet, daß die Steuerinheit (CRTC) des Datensichtgerätes (DSG) in der Weise ansteuerbar ist, daß einige oder alle auf dem ersten Bildschirmbereich enthaltenen, wenigstens ein nicht erkennbares Zeichen aufweisenden Zeichengruppen gleichzeitig zum Datensatz (D1) des ersten Bildschirmbereichs (BSB1) und in gleicher Reihenfolge auf dem zweiten Bildschirmbereich (BSB2) darstellbar sind.

4. Einrichtung nach einem der vorhergehenden Ansprüche, dadurch gekennzeichnet, daß die Anzeigesteuerung (AZS) mittels der Tastatur in der Weise ansteuerbar ist, daß nicht erkennbare und durch ein Rückweisungszeichen dargestellte, sowie durch ein Cursor-Signal markierte Zeichen an entsprechenden Stellen eintastbar sind.

5. Einrichtung nach Anspruch 4, dadurch gekennzeichnet, daß die Anzeigesteuerung (AZS) einen Vergleicher enthält, der den dem nicht eindeutig erkennbaren Zeichen wahrscheinlich entsprechenden binären Zeichencode mit dem Zeichencode des eingetasteten Zeichens vergleicht und bei einer Ungleichheit ein akustisches und/oder optisches Warnsignal auslöst.

**Claims**

1. A document processing device comprising an input station, a read station, a document viewing station comprising a visual display unit arranged above and a keyboard arranged below, a stacking station comprising one or more stacking surfaces, a control unit for the visual display unit for the combined display of alpha numerical characters, converted into a binary character code in a character classifier of the read station, in a first section of the screen and of alpha numerical and/or graphic characters from a visual data store in a second section of the screen, and of a correction circuit which marks characters which have not been recognised in the read station and which are represented by reject characters, and which subsequently keys-in the appropriate characters into the data record displayed on the visual display unit, characterised in that the correction circuit (KE) includes a first bit pattern store (BS1) for the bit patterns of all the characters of a first data record (D1) which can be represented simultaneously on the first screen section (BSB1), that this first bit pattern store (BMS1) can be actuated by the start addresses, derived from the position of the reject characters contained in the first data record (D1), in such manner that the contents of the store blocks which are assigned to the reject characters are read-out and transferred in packed form into storage blocks of a second, smaller bit pattern store (BS2), that from character groups of the first data record (D1), which contain at least one non-recognisable character, a display control unit (AZS) forms a second data record (D2) which can be displayed in a screen line inside the second screen section (BSB2), that the second bit pattern store (BMS2) is connected to a refresh store (BWS) into which the bit patterns of the reject characters from the second bit pattern store (BMS2) can be input at a respective appropriate position on the basis of addresses which result from the respective position of the reject characters within the second data record (D2), and that the control unit (CRTC) of the visual display unit (DSG) can be controlled in such manner that the contents of the refresh store (BWS) can be gated into the second screen section (BSB2) above or below the character line which contains the second data record.

2. A device as claimed in claim 1, characterised in that the control unit (CRTC) of the visual display unit (DSG) can be controlled in such manner that when a plurality of non-recognisable and closely adjacent characters occur within a character group this character group can be represented several times· and the graphic bit patterns of the non-recognisable characters are distributed among the individual character groups.

3. A device as claimed in claim 1 or 2, characterised in that the control unit (CRTC) of the visual display unit (DSG) can be actuated in such manner that some of or all of the character groups which are contained in the first screen section and which include at least one non-recognisable character can be displayed simultaneously to the data record (D1) of the first screen section (BSB1) and in the same sequence on the second screen section (BSB2).

4. A device as claimed in one of the preceding claims, characterised in that the display control unit (AZS) can be actuated by means of the keyboard in such manner that non-recognisable characters which are represented by a reject character and are marked by a cursor signal can be keyed-in at appropriate locations.

5. A device as claimed in claim 4, characterised in that the display control unit (AZS) includes a comparator which compares the binary character code, which probably corresponds to the character which cannot be recognised with certainty, with the character code of the keyed-in character and in the event of non-identity triggers an acoustic and/or warning signal.

**Revendications**

1. Dispositif de traitement de documents, qui se compose d'un poste d'entrée, d'un poste de lecture (LE), d'un poste de visualisation de documents comportant une console de visualisation (DSG) disposée au-dessus, et un clavier à touches prévu en dessous, un poste d'empilage comportant une ou plusieurs surfaces d'empilage, qui, en plus d'une unité de commande (CRTC), destinée à la console de visualisation (DSG), pour l'affichage combiné, dans une première plage de l'écran (BSB1), de signes alphanumériques convertis en un code de signes binaires dans un classificateur de signes (ZK) du poste de lecture (LE), et dans une seconde plage de l'écran (BSB2), de signes alphanumériques et/ou graphiques d'une mémoire de données-images, ainsi que d'un circuit de correction (KE) pour repérer les signes non reconnus et représentés par des signes de rebut dans le poste de lecture (LE) et pour introduire par clavier, ultérieurement, les signes correspondants dans le bloc de données représenté sur la console de visualisation (DSG), caractérisé en ce que le circuit de correction (KE) comprend une première mémoire de modèles binaires (BMS1) destinée aux modèles binaires de tous les signes d'un premier bloc de données (D1) qui peuvent être représentés simultanément sur la première plage de l'écran (BSB1), que cette première mémoire de modèles binaires (BMS1) peut être commandée par l'adresse d'origine qui découle de la position des signes de rebut contenus dans le premier ·bloc de données (D1), de manière à ce que les contenus des blocs-mémoire associés aux signes de rebut sont lus et transmis sous forme de paquets dans des blocs-mémoire d'une seconde mémoire (BMS2), qu'une commande d'affichage (AZS) forme, à partir de groupes de signes du premier bloc de données (D1) et contenant au moins un signe non reconnaissable, un second bloc de données (D2) qui peut être représenté sur une ligne d'écran de la seconde plage de l'écran (BSB2), que la seconde mémoire de modèles binaires (BMS2) est reliée à une mémoire de répétition d'image (BWS), dans lequel les modèles binaires des signes de rebut de la seconde mémoire de modèles binaires (BMS2) peuvent être mémorisés à chaque position correspondante, sur la base des adresses, qui sont fournies par chaque position des signes de rebut à l'intérieur du second bloc de données (D2), et que l'unité de commande (CRTC) de l'appareil de visualisation (DSG) peut être commandée de manière à ce que le contenu de la mémoire de répétition d'image (BWS) puisse être incrusté dans la seconde plage de l'écran (BSB2), au-dessus, ou en dessous, de la ligne de signes contenant le second bloc de données.

2. Dispositif selon la revendication 1, caractérisé en ce que l'unité de commande (CRTC) de la console de visualisation (DSG) peut être commandée de manière à ce que, dans le cas de plusieurs signes non reconnaissables et très proches à l'intérieur d'un groupe de signes, ce groupe de signes peut être représenté plusieurs fois, et les modèles binaires graphiques des signes non reconnaissables sont répartis sur les groupes de signes individuels.

3. Dispositif selon la revendication 1 ou 2, caractérisé en ce que l'unité de commande (CRTC) de la console de visualisation (DSG) peut être commandée de manière à ce que quelques, ou tous les groupes de signes contenus dans la première plage de l'écran et présentant au moins un signe non reconnaissable, peuvent être représentés simultanément dans le bloc de données (D1) de la première plage de l'écran (BSB1) et dans le même ordre de succession dans la seconde plage de l'écran (BSB2).

4. Dispositif selon l'une des revendications précédentes, caractérisé en ce que la commande d'affichage (AZS) peut être commandée, au moyen du clavier à touches, de manière à ce que des signes non reconnaissables, et représentés par un signe de rebut, ainsi que des signes représentés par un signal-curseur, peuvent être entrés au clavier dans des positions correspondantes.

5. Dispositif selon la revendication 4, caractérisé en ce que la commande d'affichage (AZS) comprend un comparateur, qui compare le code de signes binaires correspondant vraisemblablement aux signes non reconnaissables de manière nette, avec le code de signes du signe entré au clavier, et qui dans le cas d'une différence délivre un signal d'avertissement acoustique et/ou optique.

# FIG 1

0 107 083

# FIG 2

COMPUTER GESELLSCH KONSTANZ
1234567890          12345678
BUNDESZENTRALBANK FRANKFURT
            1234567 89
LIEFERUNG 123456 VOM 7.8..90
FAELLIG AM 1.1.91
MARIANNE KUPFERSCHMIED BONN
1234567890    1234567 89

# F I G 3

| SB1 | SB2 | SB3 | · · · | · · · | · · · | | | |
|---|---|---|---|---|---|---|---|---|
| | | · · · | · · · | SBk | | | SBn | |
| | | | | | | | | |
| | | | | | SBx | | | |
| | | | | | | SBy | | |
| | | | | | | | | |

BMS1

| SB2 | SBk | SBn | SBx | SBy | | | | |
|---|---|---|---|---|---|---|---|---|
| | | | | | | | | |
| | | | | | | | | |

BMS2

| | SB2 | | SBk | | SBn | | SBx | | SBy | | | BWS |

0 107 083

# FIG 4

COMPU■ER        GESELLSCH        KON■TAN■

1234567890                        12345678

BUNDESZENTRALBANK                F■ANKFURT

                    12345■7 89

LIEFERUNG        123456        VOM        7.8.90

FAELLIG        AM        1.1.91

MARIANNE        KUPFERSCHMIED                BONN

D1

BSB 1

T    S    Z R        6

BSB 2

D2  COMPU■ER        KON■TAN■        KON■TAN■        F■ANKFURT        12345■7 89